# EUROPÄISCHE PATENTSCHRIFT

(11) **EP 2 295 352 B1**
(45) Veröffentlichungstag und Bekanntmachung des Hinweises auf die Patenterteilung: **04.05.2016**
(21) Anmeldenummer: 10008497.9
(22) Anmeldetag: 14.08.2010
(51) Int. Cl.: B65G 47/84, B67C 3/24

(54) **Greifeinheit zum Halten und Bewegen von Artikeln**
Gripping unit for holding and moving items
Dispositif de prise pour tenir et déplacer des articles

(30) Priorität: 11.09.2009 DE 102009043984
(43) Veröffentlichungstag der Anmeldung: 16.03.2011
(73) Patentinhaber: Krones AG, 93073 Neutraubling (DE)
(72) Erfinder: Stoiber, Christian, 93073 Neutraubling (DE); Spitzer, Thomas, 93073 Neutraubling (DE)
(74) Vertreter: Benninger, Johannes

(56) Entgegenhaltungen:
- EP-A1- 2 138 431
- EP-A2- 0 795 500
- WO-A2-2008/009828
- DE-A1- 2 820 315
- DE-A1-102007 011 923
- DE-U1-202008 014 089
- FR-A1- 2 867 171
- US-A- 5 598 859
- US-A- 5 778 633

## Beschreibung

Die vorliegende Erfindung betrifft eine verstellbare und auswechselbare Greifeinheit für den Transport von Artikeln, insbesondere Flaschen, mit den Merkmalen des Oberbegriffes des Anspruchs 1.

### Stand der Technik

In der Verpackungsindustrie, insbesondere bei der Herstellung und bei der Abfüllung von Flaschen müssen diese in hohen Geschwindigkeiten von einer ersten verarbeitenden Maschine zu einer zweiten verarbeitenden Maschine transferiert werden. Hierbei werden Transfersysteme verwendet, beispielsweise so genannte Ein- oder Auslaufsterne mit Greiferköpfen, wie sie beispielsweise in WO 2008/129347 dargestellt sind. Die Greiferköpfe greifen die leeren oder bereits befüllten Flaschen am Hals unterhalb der oberen Öffnung, und zwar vorzugsweise unterhalb des Halsbereichs, in dem die Flaschen eine Verbreiterung aufweisen. Dies bezeichnet man allgemein auch als "neck handling".

EP 0 939 044 B1 zeigt einen Flaschengreifer mit zwei Greifarmen, bei dem die Anlagefläche ein elastisches Kissen oder eine biegbar angeordnete Blattfeder aufweist, so dass eine einfache Anpassung der durch die beiden Greifarme gebildeten Öffnung an unterschiedlichen Flaschenhalsdurchmessern möglich ist.

DE 101 40 315 A1 zeigt einen Greifer mit mindestens zwei schwenkbaren, gegen eine Federkraft zu öffnenden Greifarmen. Um eine Anpassung an unterschiedlichen Flaschendurchmessern zu ermöglichen, ist eine Schwenkachse vorgesehen. Weiterhin müssen die zwei Greifflächen zusammen zumindest drei Auflagepunkte bieten.

EP 0 854 102 B1 zeigt einen Greifer für Container, insbesondere Flaschen, der eine Stützstruktur in Form einer U- förmigen Klammer umfasst. Die Stützstruktur weist zwei Arme auf, die so betätigt werden, dass sie sich entweder in einer geschlossenen Ruhestellung oder in einer offenen Stellung befinden.

US 7 261 199 B1 zeigt eine gattungsgemäße Förderanlage mit Greifern, die die Behälter ebenfalls am Hals angreift. Die Greifer befinden sich an Verbindungselementen und sind relativ zu diesen beweglich angeordnet.

DE 102007011923 zeigt eine Vorrichtung zur Halterung von Werkstücken. Die Greifervorrichtung besteht aus einer Zangenbasis, die in eine Aufnahme des Grundelementes gesteckt ist und in diesem mittels Federzungen eingerastet und positioniert ist. Die Greifervorrichtungen sind jeweils an horizontal verschieblichen Armen angeordnet.

DE 202008014089 U1 und FR 2867171 offenbaren jeweils eine Transportvorrichtung für einen Gegenstand, insbesondere einen Transportstern mit einer Mehrzahl von Greifvorrichtungen. Diese befinden sich jeweils an einem horizontal teleskopierbaren Transportarm.

Die Aufgabe der vorliegenden Erfindung besteht darin, eine schnell verstellbare und auswechselbare Greifeinheit bereitzustellen.

Die obige Aufgabe wird durch eine Greifeinheit gelöst, die die Merkmale des Patentanspruchs 1 umfasst.

### Beschreibung

Die vorliegende Erfindung betrifft eine Greifeinheit für Transportsysteme zum Haltern und Bewegen von Artikeln. Die Greifeinheit kann beispielsweise an sternförmigen Transportsystemen angebracht sein, wobei die sternförmigen Transportsysteme dazu dienen, die Artikel, beispielsweise Hohlkörper in Form von leeren oder befüllten Flaschen, von einer ersten Verarbeitungseinheit zu einer zweiten Verarbeitungseinheit zu überführen. Beispielsweise finden solche Ein- bzw. Auslaufsterne zwischen einer Blasformmaschine, in der aus Vorformlingen Flaschen hergestellt werden, und einer daran anschließenden Füllstation Verwendung. Eine weitere beispielsweise Verwendung solcher Greifeinheiten findet sich innerhalb von Blasmaschinen wieder, wobei entweder Vorformlinge in das Blasrad eingegeben oder Flaschen aus dem Blasrad entnommen werden können.

Eine erfindungsgemäße Greifeinheit umfasst einen Greiferkopf, der mindestens zwei gegeneinander zu öffnende und zu schließende Greiferarme aufweist. In der zwischen den Greiferarmen gebildeten Öffnung wird der zu erfassende und zu transportierende Artikel gehalten. Vorzugsweise wird das Kopfteil des Artikels gehalten. Mit einer modifizierten Greifeinheit ist jedoch auch ohne weiteres eine Halterung des zu transportierenden Artikels im Bereich des Rumpfes des möglich.

Die Greifeinheit umfasst eine Verschiebeeinheit und/ oder eine Befestigungseinheit. Die Verschiebeeinheit kann direkt oder indirekt, beispielsweise über eine dazwischen angeordnete Befestigungseinheit, beweglich am Transportsystem gehaltert sein. Gemäß einer bevorzugten Ausführungsform besteht eine Greifeinheit aus einem Greiferkopf, einer Verschiebeeinheit und einer Befestigungseinheit, wobei vorzugsweise eine zweite (weiter unten beschriebene) Bewegungskomponente zwischen Verschiebeeinheit und Befestigungseinheit möglich ist. Die Verschiebeeinheit dient der ständigen Verschiebung des Greiferkopfes während eines Produktionsprozesses.

Weiterhin weist die Greifeinheit Mittel zur auswechselbaren Befestigung, Einstellung und räumlichen Festlegung des Greiferkopfes in einer ersten Bewegungsrichtung an der Greifeinheit auf. Gemäß einer bevorzugten Ausführungsform der Erfindung dienen die Mittel der vertikalen Bewegung des Greiferkopfes gegenüber der Greifeinheit und / oder gegenüber dem Transportsystem.

Gemäß einer bevorzugten Ausführungsform sind die Mittel zur auswechselbaren Befestigung, Einstellung und räumlichen Festlegung des Greiferkopfes zwischen dem Greiferkopf und der Verschiebeeinheit angeordnet. Alternativ können die Mittel zur auswechselbaren Befestigung, Einstellung und räumlichen Festlegung des Greiferkopfes auch direkt zwischen dem Greiferkopf und dem Transportsystem angeordnet sein.

Erfindungsgemäß umfassen die Mittel zur auswechselbaren Befestigung, Einstellung und räumlichen Festlegung des Greiferkopfes Formteile zur Ausbildung einer Schwalbenschwanzverbindung, die mittels einer Klemmvorrichtung in einer räumlichen Position festgelegt werden können. Außerdem ist an dem Greiferkopf eine vertikale Schwalbenschwanznut angeordnet, während die Verschiebeeinheit oder das Transportsystem das korrespondierende Gegenstück aufweist. Alternativ kann die Schwalbenschwanznut natürlich auch an der Verschiebeeinheit oder dem Transportsystem angeordnet sein, während der Greiferkopf das korrespondierende Gegenstück aufweist.

Die Mittel zur auswechselbaren Befestigung, Einstellung und räumlichen Festlegung des Greiferkopfes umfassen weiterhin einen Anschlag zur Höheneineinstellung und zum leichten Auswechseln des Greiferkopfes. Dieser ist in Form einer Stellschraube ausgebildet, mit der der Planlauf des Greiferkopfes eingestellt werden kann. Die Position des Anschlags kann wiederum mit einer seitlich angeordneten Klemmschraube gesichert und festgelegt werden. Die Mittel zur auswechselbaren Befestigung werden während eines Produktionsstillstandes eingestellt und entsprechend befestigt und verbleiben während des Produktionsbetriebes in der so festgelegten Stellung.

Die Klemmvorrichtung kann beispielsweise in Form einer Klemmschraube ausgebildet sein, die sowohl am Formteil mit Schwalbenschwanznut als auch am korrespondierenden Gegenstück festgelegt sein kann und der Fixierung der Schwalbenschwanzverbindung in der eingestellten räumlichen Position dient. Weitere dem Fachmann bekannte Festlegungsmittel sollen von der Erfindung ebenfalls umfasst sein.

Gemäß einer weiteren bevorzugten Ausführungsform weist die Greifeinheit weiterhin Mittel zur Verstellung in einer zweiten Bewegungsrichtung auf. Vorzugsweise dienen diese Mittel der horizontalen Verstellung des Greiferkopfes gegenüber dem Transportsystem.

Gemäß einer bevorzugten Ausführungsform der Erfindung sind die erste Bewegungsrichtung des Greiferkopfes und die zweiten Bewegungsrichtung des Greiferkopfes senkrecht zueinander. Insbesondere stellt die erste Bewegungsrichtung des Greiferkopfes eine vertikale Bewegung und die zweite Bewegungsrichtung des Greiferkopfes eine horizontale Bewegung dar.

Die Mittel zur Verstellung in einer zweiten Bewegungsrichtung sind vorzugsweise zwischen der Verschiebeeinheit und der Befestigungseinheit ausgebildet und umfassen beispielsweise eine Laufschiene, die eine Bewegung des Greiferkopfes in Richtung der bereits oben beschriebenen Befestigungseinheit und / oder in Richtung des Transportsystems bzw. von diesen hinweg ermöglicht.

Um die Bewegung in der zweiten Bewegungsrichtung zu erleichtern weist die Befestigungseinheit oder das Transportsystem Elemente auf, die in Laufschiene der Verschiebeeinheit eingreifen und in dieser verschiebbar sind. Dabei kann es sich beispielsweise um Laufrollen oder ähnlichem handeln, die in der Laufschiene der Verschiebeeinheit verlaufen.

Insbesondere kann mittels der zweiten Bewegungskomponente der Abstand zwischen Greiferkopf und Transportsystem variiert werden. Dies ist beispielsweise notwendig, um eine Kollision zu verhindern, wenn Artikel von einem Übergabestern zu einem anderen oder zu einer verarbeitenden Einheit transferiert werden. Hierfür können beispielsweise an der Verschiebeeinheit und / oder an der Befestigungseinheit Laufrollen angebracht sein, die der Führung der Greifeinheit in besonderen Transportschienen dienen und somit die horizontale Distanz zwischen Greiferkopf und Transfersystem immer genau festlegen.

Weiterhin betrifft die Erfindung einen Greiferkopf zur Befestigung an einem Transportsystem zum Haltern und Bewegen von Artikeln. Der Greiferkopf kann direkt oder über Zwischenelemente über eine bereits oben beschriebene Schwalbenschwanzverbindung am Transportsystem gehaltert sein. Bei den Zwischenelementen kann es sich beispielsweise um die bereits beschriebene Verschiebeeinheit und / oder Befestigungseinheit handeln.

Gemäß einer bevorzugten Ausführungsform weist der Greiferkopf zum Öffnen und Schließen der Greiferarme mindestens eine Kurvenrolle und mindestens ein Federelement auf. Die Kurvenrolle ist vorzugsweise mittig zu den Greiferbacken angeordnet. An der Achse der Kurvenrolle sind zwei drehbar gelagerte Ringe angebracht, die jeweils einen Schalthebel pro Greiferbacke betätigen, wobei die Schalthebel jeweils an den Drehachsen der Greiferbacken angebracht sind.

Da die weiteren Merkmale des Greiferkopfes bereits im Rahmen der oben beschriebenen Greifereinheit erschöpfend offenbart wurden, wird auf eine separate Beschreibung verzichtet.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
- Figur 1: zeigt eine schematische Ansicht eines Greiferkopfes;
- Figur 2: zeigt eine weitere schematische Ansicht eines Greiferkopfes;
- Figur 3: zeigt eine Greifeinheit in einer Vorderansicht;
- Figur 4: zeigt eine Greifeinheit in einer Hinteransicht;
- Figur 5: zeigt die Verstellung einer Greifeinheit in zwei Bewegungsrichtungen und
- Figur 6: stellt die Einzelteile des Greiferkopfes in einer Explosivdarstellung dar.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen insbesondere keine abschließende Begrenzung dar.

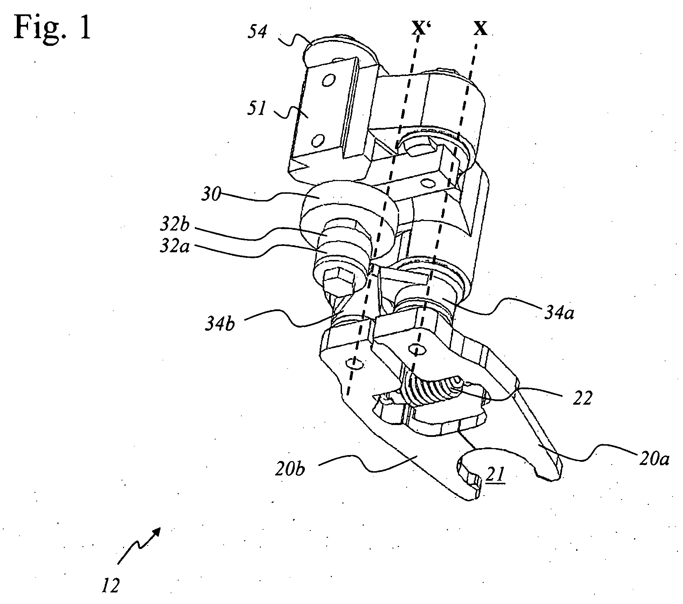

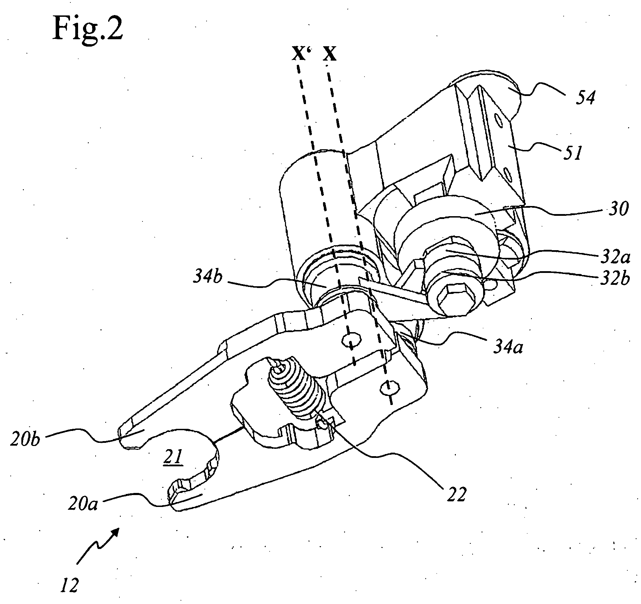

Figur 1 und Figur 2 zeigen jeweils eine schematische Ansicht eines Greiferkopfes 12 zum Festhalten und Befördern von Artikeln, insbesondere von Flaschen (nicht dargestellt), wobei die Flaschen vorzugsweise mittels der Greiferbacken 20a, 20b unterhalb der Verbreiterung am Flaschenhals, dem so genannten "Neck", gegriffen werden. Ebenso ist es denkbar, dass das Greifen am sogenannten Rumpf des Behälters erfolgt. Dies kann beispielsweise unter Verwendung modifizierter Halteelemente erfolgen.

Der Greiferkopf 12 weist zwei Greiferbacken 20a, 20b auf, wobei die durch die beiden Greiferbacken 20a, 20b gebildete Öffnung 21 variabel einstellbar ist. Diese Einstellung geschieht vorzugsweise mittels einer Kurvenrolle 30, die über zwei Schalthebel 34a und 34b an drehbaren Ringen 32a, 32b ansetzt. Die drehbaren Ringe 32a, 32b sind über die Drehachse X direkt mit den Greiferbacken 20a, 20b verbunden und bewirken deren Öffnen. Das Schließen der Greiferbacken 20a, 20b erfolgt über ein zwischen den Greiferbacken 20a, 20b angeordnetes Federelement 22. Bei dem Federelement 22 handelt es sich vorzugsweise um eine Zug- / bzw. Rückstellfeder. Dem Fachmann ist bekannt, dass die Rückstellfeder durch andere gleichwirkende Rückholelemente, beispielsweise Magnete oder Ähnliches, ersetzt werden kann.

Gemäß der hier gezeigten Ausführungsform ist also der Öffnungsmechanismus für die Greiferbacken 20a, 20b direkt am Greiferkopf integriert. Der Öffnungsmechanismus wird mit einer mittig zu den Greiferbacken 20a, 20b angeordneten Kurvenrolle 30 betätigt. An der Achse der Kurvenrolle 30 sind zwei drehbar gelagerte Ringe 32a, 32b angebracht, die jeweils den zugehörigen Schalthebel 34a, 34b der linken und rechten Greiferbacken 20a, 20b betätigen. Vorzugsweise sind die drehbar gelagerten Ringe 32a, 32b an den Drehachsen X, X' der Greiferbacken 20a, 20b angebracht.

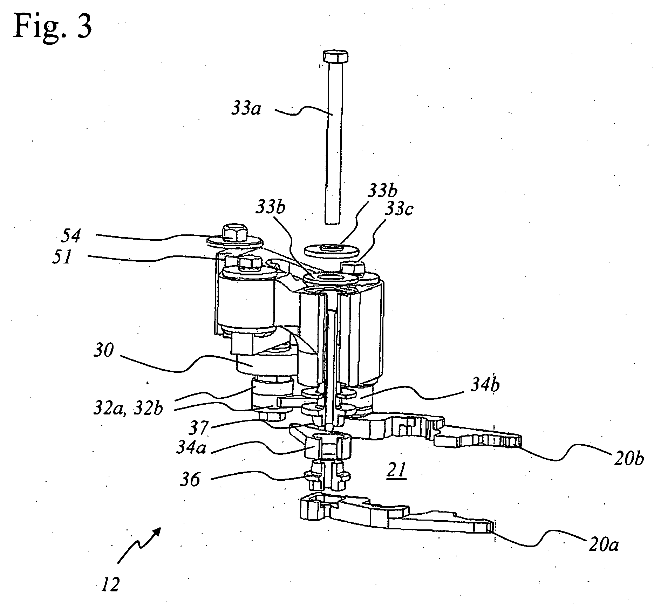

Zur einfachen Einstellung der Position und zur Sicherung im Störungsfall weist der Öffnungsmechanismus bestehend aus der Kurvenrolle 30, den Schalthebeln 34a, 34b und den drehbaren Ringen 32a, 32b die in Figur 3 dargestellten Verbindungsmittel 36, 37 auf, die zwischen der jeweiligen Drehachse X, X' der Greiferbacken 20a, 20b und dem Schalthebel 34a, 34b konisch ausgeführt sind. Dadurch kann bei der Montage des Greiferkopfes 12 die Stellung der Schaltrolle 30 zu den Greiferbacken 20a, 20b durch positionsgerechte Klemmung der Konen an den Schalthebeln 34a, 34b und an dem Verbindungsmittel 36 eingestellt werden. Im Falle einer Störung, insbesondere wenn es zu einem Zusammenstoß der beförderten Artikel kommt, erfolgt aufgrund der hohen Transportgeschwindigkeiten meist eine mechanische Verstellung des Greiferkopfes, bei der die Konusverbindung durchrutscht. Aufgrund der gewählten Bauweise kann die Position jedoch einfach wieder einjustiert werden.

Wie in den **Figuren 1** **und** **2** deutlich zu sehen ist, sind die Schalthebel 32a, 32b - von den Greiferbacken 20a, 20b aus gesehen - über Kreuz angeordnet. Bewegt sich die Kurvenrolle 30 in Richtung Klammermitte, bzw. in Richtung der Öffnung 21, so bewirkt dies ein Öffnen der Greiferbacken 20a, 20b. Eine zwischen den Greiferbacken 20a, 20b angeordnete Zugfeder 22 bewirkt das Schließen der Greiferbacken 20a, 20b und somit ein Anpassen an die zu transportierenden Artikel, insbesondere Hohlkörper aufgrund der Zugwirkung der Federspannung. Mit diesem Mechanismus können die zu transportierenden Artikel fest und sicher gehalten werden.

Weiterhin weist der Greiferkopf 12 eine vertikal angeordnete Schwalbenschwanznut 51 mit einem Anschlag 54 zur Höheneinstellung und zum leichten Auswechseln des Greiferkopfes 12 auf. Insbesondere kann es sich bei dem Anschlag 54 um eine Stellschraube handeln, mit der der Planlauf des Greiferkopfes 12 eingestellt werden kann. Die eingestellte Position des Anschlags 54 kann beispielsweise seitlich durch eine Sicherungs- Klemmschraube (nicht dargestellt) gegen Verdrehen gesichert werden.

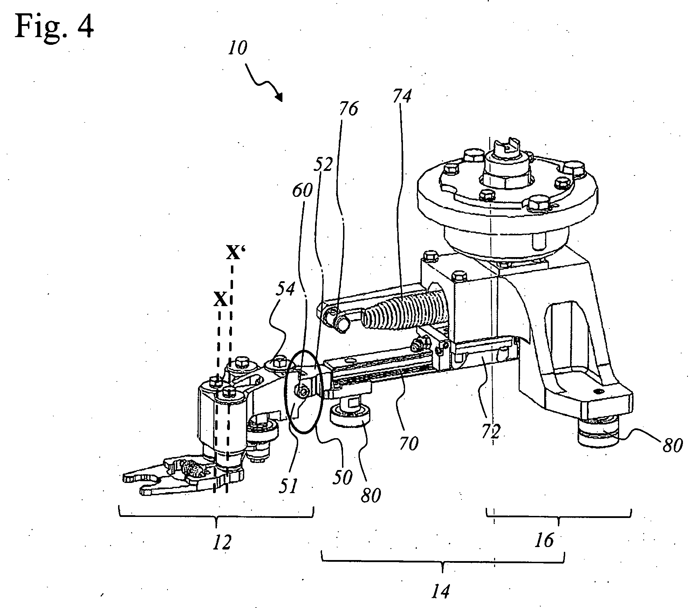

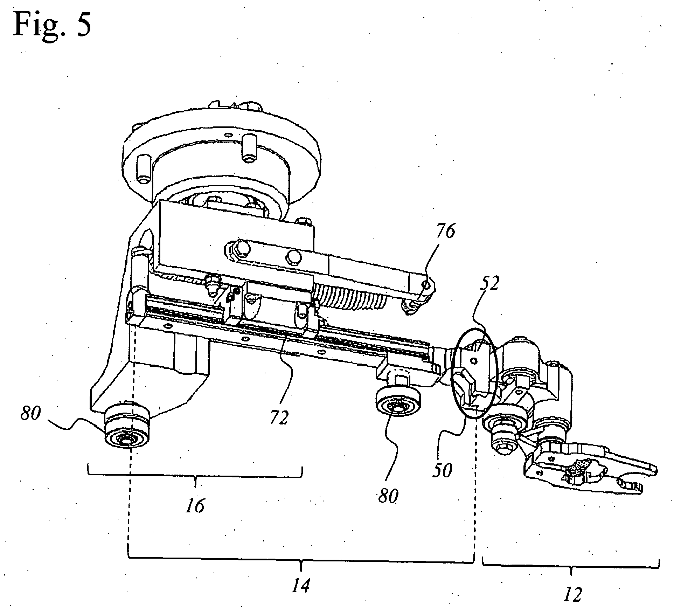

Das Zusammenwirken der Schwalbenschwanznut 51 mit einem korrespondierenden Gegenstück 52 und die Ausbildung einer entsprechenden Schwalbenschwanzverbindung 50 ist in den Figuren 4 bis 6 dargestellt.

**Figur 3** stellt die Einzelteile des Greiferkopfes 12 in einer Explosivzeichnung dar. Die Figur verdeutlicht insbesondere den Aufbau der Schalthebel 34a, 34b, der mit diesen verbundenen drehenden Ringen 32a, 32b, die der Übertragung der Schaltbewegung auf die Greiferbacken 20a, 20b dienen und die Festlegung der drehenden Ringe 32a, 32b an den Drehachsen X, X' der Greiferbacken 20a, 20b, die im gezeigten Ausführungsbeispiel wenigstens eine Schraube 33a und zwei Unterlegscheiben 33b umfasst. Andere, dem Fachmann bekannten Möglichkeiten zum Öffnen und Schließen der Greiferbacken 20a, 20b sollen von der Erfindung ebenfalls umfasst sein.

Weiterhin ist das konisch geformte Verbindungsmittel 36, 37 herausgestellt, das der einfachen Einstellung der Position der Schalthebel und zur Sicherung im Störungsfall dient.

**Figur 4****,** **Figur 5** und **Figur 6** zeigen jeweils eine Greifeinheit 10 bestehend aus einem Greiferkopf 12, einer Verschiebeeinheit 14 und einer Befestigungseinheit 16.

Der Greiferkopf 12 weist eine vertikal angeordnete Schwalbenschwanznut 51 auf, die in ein korrespondierendes Gegenstück 52 an der Verschiebeeinheit 14 greift und somit eine Schwalbenschwanzverbindung 50 bildet. Das korrespondierende Gegenstück 52 ist mit einer Klemmung 60, beispielsweise mit einer Klemmschraube versehen. Wird diese Klemmung 60 gelöst, dann kann die Höhe des Greiferkopfes 12 einfach verstellt werden. Wird die Klemmung wieder festgezogen, so ist die Position des Greiferkopfes räumlich gegenüber der Verschiebeeinheit und somit auch räumlich gegenüber dem Transportsystem festgelegt.

Weiterhin kann der gesamte Greiferkopf 12 entnommen werden und gegen einen anderen Greiferkopf 12 ausgetauscht werden, der ebenfalls eine gleichartige Schwalbenschwanznut 51 aufweist, die formschlüssig in das korrespondierende Gegenstück 52 der Verschiebeeinheit 14 eingreift. Somit ist ein einfacher Austausch des Greiferkopfes 12 möglich.

Es kann also einfach ein beschädigter Greiferkopf 12 ersetzt werden oder gegebenenfalls ein anderer Greiferkopf 12 eingesetzt werden, der an die zu verarbeitenden Artikel angepasst ist. Dies ist beispielsweise notwendig, wenn Artikel mit einem deutlich anderen Durchmesser gehaltert und transportiert werden sollen, so dass die Verwendung eines anderen Greiferkopfes 12 zwingend notwendig ist.

Die Befestigungseinheit 16 dient als Verbindungsglied zwischen der Einheit bestehend aus Greiferkopf 12 und Verschiebeeinheit 14 und dem Transportsystem, beispielsweise einem Ein- bzw. Auslaufstern oder ähnlichem. Die Befestigungseinheit 16 ist auf dem Transportsystem mit einem rotativen Freiheitsgrad gelagert, der zur Linearbewegung des Greiferkopfes eine zusätzliche Rotationsbewegung relativ zum Transportsystem ermöglicht.

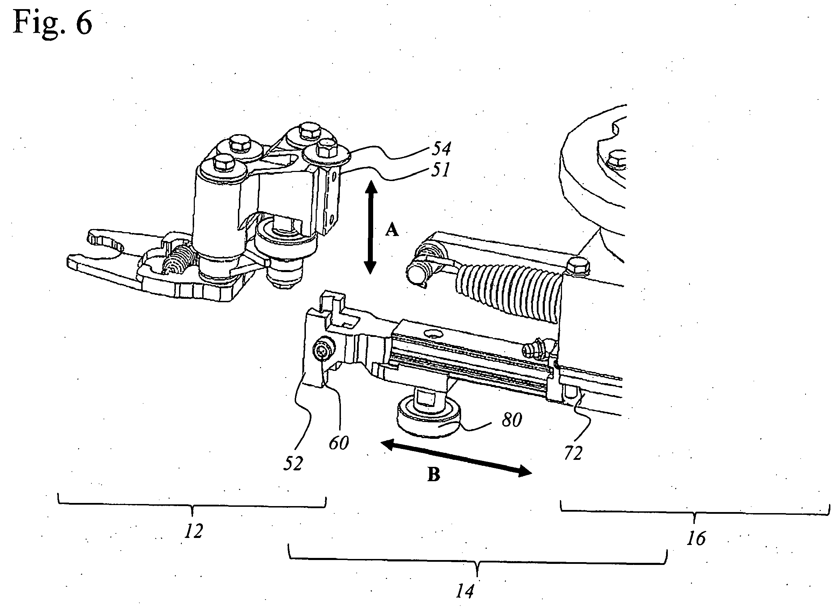

**Figur 6** verdeutlicht die Möglichkeiten der vertikalen Einstellmöglichkeit A über eine Schwalbenschwanzverbindung 50 bestehend aus der Schwalbenschwanznut 51 an dem Greiferkopf 12 und dem entsprechenden Gegenstück 52 an der Verschiebeeinheit 14, sowie die horizontalen Einstellmöglichkeit B zwischen der Verschiebeeinheit 14 und der Befestigungseinheit 16, die den Abstand zwischen Greiferkopf und Transportsystem beeinflusst.

Im gezeigten Ausführungsbeispiel ist die Verschiebeeinheit 14 zwischen dem Greiferkopf 12 und der Befestigungseinheit 16 angeordnet. Die Verschiebeeinheit 14 ist in der Gestalt aufgebaut, dass eine Linearbewegung / Schieberbewegung in horizontaler Richtung möglich ist. Vorzugsweise weist die Verschiebeeinheit 14 eine Laufschiene 70 auf. Die Befestigungseinheit 16 weist korrespondierende Laufmittel 72 auf, die in die Laufschiene 70 eingreifen und in dieser verschiebbar sind.

Die Linearbewegung der Verschiebeeinheit 14, d.h. insbesondere die Schieberbewegung, wird von einem Federelement 74, insbesondere von einer Zugfeder unterstützt, die dem vereinfachten Zurückholen in eine erste Ausgangsposition dient. Die Zugfeder 74 ist mit ihrem hinteren Anschlagpunkt 76 an der drehenden Befestigungseinheit 16 angebracht. Der vordere Anschlagpunkt 75 der Zugfeder 74 ist an der Verschiebeeinheit 14 befestigt.

Ist die Verschiebeeinheit 14 beispielsweise an einem rotierenden Übergabestern (nicht dargestellt) angeordnet, dann unterstützt die Zugfeder 74 zudem die auf die Verschiebeeinheit 14 wirkende, durch die Rotation des Sterns entstehende Zentrifugalkraft.

Insbesondere kann mittels der zweiten Bewegungskomponente der Abstand zwischen Greiferkopf 12 und Transportsystem variiert werden. Dies ist beispielsweise notwendig, um eine Kollision zu verhindern, wenn Artikel von einem Übergabestern zu einem anderen oder zu einer verarbeitenden Einheit transferiert werden. Hierfür können beispielsweise an der Verschiebeeinheit 14 und / oder an der Befestigungseinheit 16 Laufrollen 80 angebracht sein, die der Führung der Greifeinheit in besonderen Transportschienen (nicht dargestellt) dienen und somit die horizontale Distanz zwischen Greiferkopf 12 und Transfersystem immer genau festlegen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Greifeinheit
- 12: Greiferkopf
- 14: Verschiebeeinheit
- 16: Befestigungseinheit
- 20a/b: Greiferbacken
- 21: Öffnung
- 22: Federelement / Zugfeder / Rückholfeder
- 30: Kurvenrolle
- 32a/b: drehbare Ringe
- 33a: Schraube
- 33b: Unterlegscheibe
- 33c: Mutter
- 34a/b: Schalthebel
- 36: konisches Verbindungsmittel
- 37: konisches Verbindungsmittel
- 50: Schwalbenschwanzverbindung
- 51: Schwalbenschwanznut
- 52: korrespondierendes Gegenstück zur Schwalbenschwanznut
- 54: Anschlag
- 60: Klemmung
- 70: Laufschiene
- 72: Laufmittel
- 74: Federelement / Zugfeder
- 75: vorderer Anschlagpunkt
- 76: hinterer Anschlagpunkt
- 80: Laufrolle
- A: vertikale Einstellmöglichkeit
- B: horizontale Einstellmöglichkeit
- X/X': Drehachse

## Patentansprüche

1. Greifeinheit (10) für Transportsysteme zum Haltern und Bewegen von Artikeln, wobei die Greifeinheit (10) einen Greiferkopf (12) mit mindestens zwei gegeneinander zu öffnenden und zu schließenden Greiferarmen (20a, 20b) umfasst, die eine Öffnung (21) bilden, in der der zu erfassenden Artikels halterbar ist, wobei die Greifeinheit (10) eine Verschiebeeinheit (14) umfasst, wobei die Verschiebeeinheit (14) beweglich über eine Befestigungseinheit (16) gehaltert ist,
wobei Mittel zur Verstellung des Greiferkopfes (12) gegenüber dem Transportsystem in einer zweiten horizontalen Bewegungsrichtung (B) vorgesehen sind, welche zwischen der Verschiebeeinheit (14) und der Befestigungseinheit 16) ausgebildet sind,
wobei die Greifeinheit (10) Mittel (50, 51, 52, 54, 60) zur auswechselbaren Befestigung, Einstellung und räumlichen Festlegung des Greiferkopfes (12) in einer ersten Bewegungsrichtung (A) an der Greifeinheit (10) aufweist, die zwischen dem Greiferkopf (12) und der Verschiebeeinheit (14) oder zwischen dem Greiferkopf (12) und dem Transportsystem angeordnet sind, **dadurch gekennzeichnet, dass**
die Mittel zur auswechselbaren Befestigung, vertikalen Einstellung und räumlichen Festlegung des Greiferkopfes (12) eine am Greiferkopf (12) vertikal angeordnete Schwalbenschwanznut (51) mit einem als Stellschraube ausgeführten Anschlag (54) zur Höheneinstellung und zum leichten Auswechseln des Greiferkopfes (12) umfassen.

2. Greifeinheit (10) gemäß Anspruch1, wobei die Mittel zur auswechselbaren Befestigung, Einstellung und räumlichen Festlegung des Greiferkopfes (12) Formteile (51, 52) zur Ausbildung einer Schwalbenschwanzverbindung (50) und eine Klemmvorrichtung (60) umfassen.

3. Greifeinheit (10) gemäß einem der Ansprüche 1 bis 2, wobei der Greiferkopf (12) zum Öffnen und Schließen der Greiferarme (20a, 20b) mindestens eine Kurvenrolle (30) und mindestens ein Federelement (22) aufweist.

4. Greifeinheit (10) gemäß Anspruch 3, wobei ein Öffnungsmechanismus für die Greiferarme (20a, 20b) direkt am Greiferkopf (12) integriert ist, wobei der Öffnungsmechanismus mit der mittig zu den Greiferarmen (20a, 20b) angeordneten Kurvenrolle (30) betätigbar ist, wobei an einer Achse der Kurvenrolle (30) zwei drehbar gelagerte Ringe (32a, 32b) angebracht sind, durch die jeweils ein zugehörigen Schalthebel (34a, 34b) der Greiferarme (20a, 20b) betätigbar ist.

5. Greifeinheit (10) gemäß Anspruch 4, wobei die drehbar gelagerten Ringe (32a, 32b) an Drehachsen (X, X') der Greiferarme (20a, 20b) angebracht sind.

6. Greifeinheit (10) gemäß einem der Ansprüche 1 bis 5, wobei der Greiferkopf (12) Schalthebel (34a, 34b) zum Öffnen der Greiferarme (20a, 20b) aufweist und konische Verbindungsmittel (36, 37) zur einfachen Einstellung der Position der Schalthebel (34a, 34b) und zur Sicherung im Störungsfall umfasst.

7. Greifeinheit (10) gemäß einem der Ansprüche 4 bis 6, wobei der Öffnungsmechanismus zur einfachen Einstellung der Position und zur Sicherung im Störungsfall Verbindungsmittel (36, 37) aufweist, die zwischen der jeweiligen Drehachse (X, X') der Greiferarme (20a, 20b) und den Schalthebeln (34a, 34b) konisch ausgeführt sind.

8. Greifeinheit (10) gemäß einem der voranstehenden Ansprüche, wobei die Mittel zur Verstellung in der zweiten Bewegungsrichtung (B) eine Laufschiene (70) umfassen.

9. Greifeinheit (10) gemäß einem der voranstehenden Ansprüche, wobei die Mittel (50, 51, 52, 54, 60) zur auswechselbaren Befestigung, vertikalen Einstellung und räumlichen Festlegung des Greiferkopfes (12) eine lösbare Klemmvorrichtung (60) umfassen, wobei bei gelöster Klemmvorrichtung (60) die Höhe des Greiferkopfes (12) verstellbar ist und wobei bei festgezogener Klemmvorrichtung (60) die Position des Greiferkopfes (12) räumlich gegenüber der Verschiebeeinheit (14) und dem Transportsystem festgelegt ist.

10. Greifeinheit (10) gemäß einem der voranstehenden Ansprüche, wobei durch die Greiferarme (20a, 20b) eine Flasche oder einen Vorformling für den Transport greifbar ist.

## Claims

1. Gripper unit (10) for transport systems for supporting and transporting of articles, wherein the gripper unit (10) comprises a gripper head (12) with at least two gripper arms (20a, 20b), whereby the gripper arms can be opened and closed against each other, and said gripper arms forming an opening (21) in which the article to be gripped is held, wherein the gripper unit (10) comprises a displacement unit (14), wherein the displacement unit (14) is movably connected manner to a fastening means (16) or directly to the transport system,
with means for shifting the gripper head in relation to the transport systems in a second horizontal direction of movement (B), wherein said means are arranged between the displacement unit (14) and the fastening means 16),
wherein the gripper unit (10) is provided with means (50, 51, 52, 54, 60) for interchangeable support, adjustment and spatial determination of the gripper head (12) in a first direction of movement (A) at the gripper unit (10), wherein said means are arranged between the gripper head (12) and the displacement unit (14) or between the gripper head (12) and the transport system,
**characterized in that**
the means for interchangeable support, adjustment and spatial determination of the gripper head (12) is formed by a dovetail groove (51) vertically arranged at the gripper head (12) and comprises a limit stop (54) formed by an adjustable screw for height adjustment and easy exchange of the gripping head (12).

2. Gripper unit (10) according to claim 1, wherein the means for interchangeable support, adjustment and spatial determination of the gripper head (12) comprise moulded parts (51, 52) for forming a dovetail joint (50) and a clamping device (60).

3. Gripper unit (10) according to one of the claims 1 or 2, wherein the gripper head (12) comprises at least one cam roller (30) and at least one spring element (22) for opening and closing the gripper arms (20a, 20b).

4. Gripper unit (10) according to claim 3, wherein an opening mechanism for the gripper arms (20a, 20b) is directly integrated at the gripping head (12), wherein the opening mechanism can be actuated by the cam roller (30), the cam roller being arranged centrally with respect to the gripper arms (20a, 20b), wherein two rotatably mounted rings (32a, 32b) are arranged at one axis of the cam roller (30),
wherein the rings can each be actuated by a respectively accompanying gear lever (34a, 34b) of the gripping arms (20a, 20b).

5. Gripper unit (10) according to claim 4, wherein the rotatably mounted rings (32a, 32b) are attached to axes of rotation (X, X') of the gripping arms (20a, 20b).

6. Gripper unit (10) according to one of the claims 1 to 5, wherein the gripper head (12) is provided with gear levers (34a, 34b) for opening the gripper arms (20a, 20b) and has cone- shaped fastening means (36, 37) for easy adjustment of the position of the gear levers (34a, 34b) and for safeguarding in the event of malfunction.

7. Gripper unit (10) according to one of the claims 4 to 6, wherein the opening mechanism comprises fastening means (36, 37) for easy adjustment of the position of the gear levers (34a, 34b) and for safeguarding in the event of malfunction, wherein the fastening means are conically shaped between the respective axis of rotation (X, X') of the gripping arms (20a, 20b) and the gear levers (34a, 34b).

8. Gripper unit (10) according to one of the previous claims, wherein the means for shifting in the second direction of movement (B) comprise a guide rail (70).

9. Gripper unit (10) according to one of the previous claims, wherein the means (50, 51, 52, 54, 60) for interchangeable support, vertical adjustment and spatial determination of the gripper head (12) comprises a detachable clamping device (60),
wherein the height of the gripping head (12) is adjustable when the clamping device (60) is detached and wherein the position of the gripping head (12) is set in a defined position relative to the displacement unit (14) and the transport system when the clamping device (60) is tightened.

10. Gripper unit (10) according to one of the previous claims, wherein the gripper arms (20a, 20b) can grip a bottle or a preform for transport.

## Revendications

1. Unité de préhension (10) pour des systèmes de transport, destinée à maintenir et à déplacer des articles, ladite unité de préhension (10) comprenant une tête de préhension (12) ayant au moins deux bras de préhension (20a, 20b) à ouvrir et à fermer l'un contre l'autre qui forment une ouverture (21) dans laquelle l'article (14) à saisir peut être maintenu, ladite unité de préhension (10) comprenant une unité de déplacement (14), ladite unité de déplacement (14) étant supportée de manière mobile par une unité de fixation (16),
dans laquelle des moyens de réglage de la tête de préhension (12) par rapport au système de transport dans une deuxième direction de déplacement (B) horizontale sont prévus qui sont réalisés entre l'unité de déplacement (14) et l'unité de fixation (16),
dans laquelle ladite unité de préhension (10) présente des moyens (50, 51, 52, 54, 60) destinés à attacher de manière échangeable, à régler et à fixer dans l'espace ladite tête de préhension (12) dans une première direction de déplacement (A) sur l'unité de préhension (10), qui sont disposés entre la tête de préhension (12) et l'unité de déplacement (14) ou entre la tête de préhension (12) et le système de transport, **caractérisée par le fait que**
lesdits moyens d'attache échangeable, de réglage vertical et de fixation dans l'espace de la tête de préhension (12) comprennent une rainure en queue d'aronde (51) disposée verticalement sur la tête de préhension (12) et ayant une butée (54) réalisée en tant que vis de réglage pour le réglage de hauteur et pour un échange facile de la tête de préhension (12).

2. Unité de préhension (10) selon la revendication 1, dans laquelle lesdits moyens d'attache échangeable, de réglage et de fixation dans l'espace de la tête de préhension (12) comprennent des pièces façonnées (51, 52) pour la réalisation d'un assemblage à queue d'aronde (50) ainsi qu'un dispositif de serrage (60).

3. Unité de préhension (10) selon l'une quelconque des revendications 1 à 2,
dans laquelle, pour ouvrir et fermer les bras de préhension (20a, 20b), la tête de préhension (12) présente au moins un galet de came (30) et au moins un élément formant ressort (22).

4. Unité de préhension (10) selon la revendication 3, dans laquelle un mécanisme d'ouverture pour les bras de préhension (20a, 20b) est intégré directement sur la tête de préhension (12), ledit mécanisme d'ouverture pouvant être actionné par le galet de came (30) disposé de manière centrale par rapport aux bras de préhension (20a, 20b), sur un axe du galet de came (30) étant montées deux bagues (32a, 32b) logées à rotation par le biais desquelles respectivement un levier de commande (34a, 34b) associé des bras de préhension (20a, 20b) peut être actionné.

5. Unité de préhension (10) selon la revendication 4, dans laquelle les bagues (32a, 32b) logées à rotation sont montées sur des axes de rotation (X, X') des bras de préhension (20a, 20b).

6. Unité de préhension (10) selon l'une quelconque des revendications 1 à 5,
dans laquelle la tête de préhension (12) présente des leviers de commande (34a, 34b) pour ouvrir les bras de préhension (20a, 20b) et comprend des moyens de liaison (36, 37) coniques pour un réglage facile de la position des leviers de commande (34a, 34b) et pour une sécurisation en cas de panne.

7. Unité de préhension (10) selon l'une quelconque des revendications 4 à 6,
dans laquelle, pour un réglage facile de la position et pour une sécurisation en cas de panne, le mécanisme d'ouverture présente de moyens de liaison (36, 37) qui sont réalisés de façon conique entre l'axe de rotation (X, X') respectif des bras de préhension (20a, 20b) et les leviers de commande (34a, 34b).

8. Unité de préhension (10) selon l'une quelconque des revendications précédentes, dans laquelle les moyens de réglage dans la deuxième direction de déplacement (B) comprennent une glissière (70).

9. Unité de préhension (10) selon l'une quelconque des revendications précédentes, dans laquelle lesdits moyens (50, 51, 52, 54, 60) d'attache échangeable, de réglage vertical et de fixation dans l'espace de la tête de préhension (12) comprennent un dispositif de serrage (60) apte à être desserré, dans laquelle, lorsque ledit dispositif de serrage (60) est desserré, la hauteur de la tête de préhension (12) est réglable et dans laquelle, lorsque le dispositif de serrage (60) est serré, la position de la tête de préhension (12) est fixée dans l'espace par rapport à l'unité de déplacement (14) et au système de transport.

10. Unité de préhension (10) selon l'une quelconque des revendications précédentes, dans laquelle une bouteille ou une préforme peut être saisie par les bras de préhension (20a, 20b) pour être transportée.
